# EUROPEAN PATENT SPECIFICATION

(11) **EP 3 576 542 B1**
(45) Date of publication and mention of the grant of the patent: **19.07.2023**
(21) Application number: 18709405.7
(22) Date of filing: 31.01.2018
(51) Int. Cl.: A23B 4/06, A23B 4/07, A23B 4/03

(54) **METHOD FOR THE TREATMENT AND CONSERVATION OF FISH MEAT**
VERFAHREN ZUR BEHANDLUNG UND KONSERVIERUNG VON FISCHFLEISCH
PROCÉDÉ DE TRAITEMENT ET DE CONSERVATION DE CHAIR DE POISSON

(30) Priority: 01.02.2017 IT 201700010868
(43) Date of publication of application: 11.12.2019
(73) Proprietor: Acampora, Maurizio, Torre del Lago, Viareggio (IT)
(72) Inventor: Acampora, Maurizio, Torre del Lago, Viareggio (IT)
(74) Representative: Sach, Greg Robert
(86) International application number: PCT/IT2018/050014
(87) International publication number: WO 2018/142438

(56) References cited:
- EP-A1- 2 614 729
- EP-A1- 2 614 729
- WO-A1-2014/187483
- WO-A1-2014/187483
- GB-A- 2 019 191
- GB-A- 2 019 191
- US-A- 2 110 801
- US-A- 2 110 801
- US-A- 2 120 237
- US-A- 2 120 237
- US-A- 2 278 472
- US-A- 2 278 472
- US-A- 2 713 003
- US-A- 2 713 003
- US-A- 4 898 741
- US-A- 4 898 741
- US-A1- 2011 027 439
- US-A1- 2011 027 439
- US-A1- 2014 004 235
- US-A1- 2014 004 235

## Description

### Field of the invention

The present patent application concerns the food sector and more particularly the fresh fish processing chain. As is known, especially in recent years, human nutrition is increasingly the subject of in-depth studies and evaluations, since it is now established that there is a strong link between diet and health. In this case, many studies prove the importance of introducing fish in everyday food since the nutritive supply offered by the fish resource is very important for the human body at all ages: for example, the beneficial effects of "omega 3" as powerful antioxidants and contained in large quantities in fish are known. Of course, having determined the importance of this precious element for human nutrition, people have always tried to work and/or preserve the fish so that it could remain edible and well preserved even at the expiry dates not immediately close to the moment of capture, namely it is know problem of preserving the fish in the best possible way so as to obtain a very convenient expiry date for its consumption.

### Prior art

In long past times, the main objective was to safeguard the conservation of raw materials while today, in addition to this fundamental aspect, a great attention is also rightly added to the maintenance of taste and appearance. In this regard, more than two centuries ago already, the Viareggio fishermen used to leave the fish to dry for about two hours in front of the sea in order to make it tastier. It is also known that the taste and flavor of a fish dish immediately after the capture of the raw material remain generally much better with respect to a preserved product; freshness is very much felt in this type of food, which is why, with the advent of modern preservation technologies, people have tried to refine the processes that allow to obtain those characteristics of the fish product that are as similar as possible to those typical of the non-stored product.

With regard to the industrial methods of fish preservation, it is possible to say that several different types can be identified, in particular this need (of conservation) is particularly felt in the J apanese area where the fish is one of the main foods of the local diet.

One of the characteristics that distinguishes the freshness of the fish is undoubtedly the color of its flesh that, during the working process and in the following times may very easily change considerably, thus becoming a sign for the user of a product that does not certainly appear fresh and substantially less palatable and therefore at least apparently, if not even by substance, more substandard both from a commercial and from an organoleptic point of view.

The fish flesh is usually frozen and then vacuum-sealed in the following phase. This causes problems as will be described below.

A method described for tuna flesh, designed to maintain the freshness and color of tuna flesh, includes for example the practice of using a strong and sudden freezing of the product (even up to -606 C), also called blast chilling, then it is followed by the subsequent vacuum packaging, for example with synthetic materials (e.g. PE or PP). Subsequently the tuna is kept frozen, but at higher temperatures (about -206 C), a temperature that allows the transport and/or storage of the product in warehouses, before being purchased and consumed. This process, described above, in particular, is used to keep the color of the fish flesh unaltered, but it would appear that the results of this procedure do not consider the alteration of the taste and freshness of the product; these decisively fundamental characteristics remain characteristics that are only assessed secondarily. Furthermore, this process is generally used for the processing only of tuna flesh and not for other types of fish as pointed out by the author. Furthermore, it is not better specified when the blast chilling takes place compared to the time of fishing of the tuna nor, how and if, the product is treated before this process, nor are indicated the subsequent phases of preparation and consumption and/or any chemical treatments to which the tuna may be submitted.

Then there are other methods suitable for treating fish to allow "raw" use, even after a rather long time has elapsed since the first processing of fish flesh; in this case the focus is therefore maintained on keeping the product tasty, as well as consumable raw legally.

Although the problems of the field are known, some of which have been cited above, one of the aspects that the experts of the sector deem to have been poorly treated with regard to the preservation of fish flesh basically concerns the quality of the final product in terms of maintaining nutritional qualities and appearance, as well as maintaining original freshness; this not only for the appearance of the product but for everything related to the consistency and nutritional quality of the product that the user will consume.

In particular, some of the steps that are usually applied to preserve fish flesh, such as how to treat fish before it being subjected to a preservation process, are not specified by many methods, or often include the addition of preservatives , as well as substances designed to maintain unaltered the color and fragrance of the fish; moreover, sometimes water is added to the fish flesh, an apparently harmless element that is said to be used to keep the flesh firm, but this factor increases in a decidedly misleading way the weight of the product sold, this obviously to the detriment of the consumer.

In particular, it is here of interest for the present invention the step of subjecting the fish flesh to vacuum, which in most cases takes place without first chill blasting the product (or having it kept at temperatures around -30/-60 degrees for a period suitable to reduce the internal temperature of the fish in an appropriate manner). Note that if the fish flesh is only frozen, or placed at temperatures around -20 degrees Celsius, the preservation of the product is usually compromised even in the short term.

This is because, as is known, there is a great difference between freezing and blast chilling; that is, the ice crystals that are formed in the standard freezing are much larger than the ice crystals that are formed with the abatement procedure, so the product that is "only" frozen, after putting it under vacuum, suffers much more damage as the flesh of fish swells because of the ice crystals, ruining itself; the preservation in itself is validly protected, but when the product is defrosted, when it is used, the defrosted fish loses the compactness of the fresh fish and tends to disintegrate if it is cooked for too long. The frozen product when defrosting loses liquids (proteins vitamins and water) by effect of a gross crystallization that occurs during the freezing phase that breaks the cells (usually too full of liquids). So there is a substantial loss and dispersion of nutrients.

If, however, a product neither frozen nor blast chilled is put under vacuum, the procedure implies absorption of the liquids in the product depriving the product of these liquids also the nutrients that make fish flesh particularly valuable as food are decreased and the original flavor of fish flesh is negatively impacted, in fact, if the product put under vacuum is fresh, the vacuum machine does not pump out only air but also organic liquids which, when they come into contact with the hot sealing of the bag, undergo a maximal thermal alteration at the welding point, which decreases as the distance from the welding point increases. This fact involves an activation of the bacterial processes that accompany the decomposition, even if after it is brought to temperatures of -20 and more the initiated process causes a change in flavor.

For this reason, often the products are added with substances to preserve some characteristics, in any case often the user consumes a product that is of poor quality and often expensive, or more valid only in appearance, but added with non-natural substances.

With reference to the aforementioned patent, which provides a method which first includes the abatement phase and then the vacuuming of the product; apart from being poorly described without details concerning the treatment of the fish before blast chilling, or details about the method of processing the fish, or details about the addition or not of substances, or method of preserving the fish, said method deals only with tuna flesh, in particular to be eaten raw. Advantageously, in this case, the ice crystals formed inside the fish flesh are smaller in size, so at the time of thawing the product appears to have a more similar appearance to the one when fresh and in cooking it maintains its compactness. Note, however, that if the product is cooked for too long, it becomes disadvantageously much harder than a fresh product

Furthermore, even in this case, disadvantageously, there is another very important problem that even the abatement of the product before being put under vacuum does not solve: namely the loss of nutrients that occurs when the product is vacuum-sealed; so that the product consumed is more similar to the fresh product in terms of quality, but has however lost significant nutrients compared to the fresh product.

Basically there are a plurality of methods applicable for the preservation of fish, in particular aimed at the consumption of the product thawed after storage, raw or after being cooking; the methods vary under a multiplicity of aspects depending also on the period of preservation of the product, etc.

Document US 22784472, dated 1942,discloses a method for the preservation of products such as meat, fish and vegetables, which aims at providing a better preservation and an easier cooking, which comprises an important drying phase at high temperatures.

An object of the present invention is to describe a method for preserving fish flesh which allows to maintain the quality of fish flesh as if it were fresh fish even for very long periods, such as months.

A further object of the present invention is to describe a method for preserving fish flesh that allows to obtain a compact cooked product both having the aspect and the substance of fresh fish.

Another object of the present invention is to describe a method for preserving fish flesh that does not include the use of chemical additives for preserving the product

Furthermore, an object of the present invention is to describe a method for preserving fish flesh that allows the subsequent consumption of both cooked and raw fish. Another object of the present invention is to describe a method for preserving fish flesh that does not include the addition of any additives to the fish flesh as originally fished.

A further object of the present invention is to describe a method for preserving fish flesh which preserves once it has been thawed the same characteristics of fresh fish.

Another object of the present invention is to describe a method for preserving fish flesh which preserves the same organoleptic characteristics of fresh fish once it has been thawed.

Another object of the present invention is to describe a method for preserving fish flesh which preserves the same nutritional characteristics of fresh fish once thawed.

It is also a non-limiting purpose of the present invention to describe a method for preserving fish flesh particularly suitable for fish sizes comprised between 1/2 kg and 3 kg.

### Brief description of the invention

These and further objects of the present invention will be realized by virtue of the innovative method for the preservation of fish flesh which substantially comprises at least stages of processing fish flesh after fishing such as evisceration of fish, keeping the fish in an air-conditioned environment, filleting the fish and elimination of any fish bones, stripping of the fillets, said method in a particularly advantageous and innovative way comprises a dehumidification phase in a cell in order to eliminate substantially at least from 4 to 10% of the water present in the fish flesh, said process identifying a decrease in the weight of the fish flesh of about 4-10%.

In a subsequent step, the fish flesh may be prepared in the form of fillets or it can be processed as grinded flesh and then re-assembled as a fish burger. In the case of processing fish flesh as grinded flesh, said process preferably takes place in a refrigerated meat grinder which works substantially at 0 degrees Celsius; the product coming out from the flesh grinder is at an approximate temperature of 10-15 degrees Celsius; the oxygenation of the fish flesh caused by the grinding together with the increase in temperature advantageously causes a loss of moisture with a drop in the total weight of 3% of weight lost in the form of liquids. A brief parenthesis it is opened here to understand some particularly innovative features of the method described by the present invention: dehumidification, in general, is done by putting the product in contact with air that has just undergone heating, so it may be inside a normal ventilated refrigerated cell, where the air enters the refrigerant liquid passing from 0-4 degrees Celsius (operating temperature of a fridge) to -2/-4 degrees Celsius, losing moisture (which is why the refrigerating elements of the refrigerator cells they are always full of ice and need a defrosting program) and then resume temperature when, leaving the cooling element, it returns to the refrigerated cell; the increase in temperature expands the gas (air) which due to its physical structure absorbs moisture. This is one of the reasons why fresh fish placed in a refrigerated cell is protected with a tissue or covered with ice to avoid this phenomenon.

Clearly with such a procedure the times for a significant drying or dehumidification are very long, namely 18/24 hours. To obviate to this problem and obtain relevant results, the applicant has inventively modified and combined a ventilated fridge, for example of a vertical type used in the sector, with a dryer obtaining an ad hoc device made in order to achieve one or more objects described by the present invention Said device will be defined here and hereinafter a dehumidifier device, noting that in any case the example shown here is only indicative of the procedure that the applicant realizes; so that any device suitable for achieving the same result will be suitable for carrying out the innovative method described by the applicant.

In a particularly preferred embodiment, the method of the invention is carried out using a dehumidification device comprising a refrigerator cell and a dryer machine placed outside said refrigerator cell, the dryer being connected to the refrigerator cell by means of an inlet and an outlet placed respectively the first in the upper part of the refrigerator cell and the second in the lower part of said refrigerator cell; by means of a special circuit, air is drawn into the lower part of the refrigerator and is conveyed to the dryer where the air is dried. Subsequently, the air thus dehumidified is introduced by entering the upper part of the refrigerator cell where the fish to be treated has already been inserted. The temperature of the refrigerator is to be adjusted, for example, to 4 degrees Celsius, extracting air from the refrigerator and by conveying it into the dryer, said air increases in c.a. 2-3 degrees Celsius; this occurs due to the exposure of the circuit to the external environment, especially in the case of poor heat insulation of the connections. The external environment is usually preferably air-conditioned, which allows to maintain a stable temperature rise. The air leaving the dryer is returned to the other part of the refrigerator in the vicinity of the refrigerating cell block; since the intake air is advantageously hotter, it remains in the upper part of the fridge and therefore does not come into contact with the fish flesh, until it has been cooled by the refrigerating cell block and then descends down on the fish flesh.

In this way the air that will be conveyed in contact with the fish will again be at a desired temperature that will be decided from time to time depending on the quantity of fish and on the relevant regulations. It should be noted that, advantageously, the de-humidified re-inserted air containing a reduced percentage of water does not create ice crystals on the refrigerant cell.

The device is placed in an air-conditioned environment; the air is dehumidified by a decided percentage at the discretion of the user.

It should be noted that in itself the dehumidification process or better the dehumidification cycle is decidedly slow, so by heating the air as described, the whole process is significantly speeded up.

In a particularly advantageous way in this case the drying times, namely dehumidification of the product, have been reduced to 2/3 hours (depending on the quantity of product introduced into the refrigerator).

It should be noted that the applicant is the first to have applied this method for preserving fish flesh in the manner described by the present invention.

It should be noted that, in a particularly advantageous way, the weight loss due to the loss of water during the dehumidification process causes all the nutrients to remain inside the fish flesh; in fact, during the dehumidification process specially designed and studied in order to treat fish according to the method described herein, only the H₂O contained in the fish is evaporated, while every other substance remains in the fish flesh. (So the applicant unlike most of the fish producers who add water to make the product "weigh" more, proceeds to the dehumidification for reasons of quality maintenance of the product that will be discussed below.)

It has been studied on the basis of numerous laboratory tests that the ideal dehumidification point is just about 5% in order to not over-dry the fish flesh, but to deprive it of water in a sufficient way to obtain the advantageous results that will be described below.

Subsequently, the dehumidified and possibly grinded fish flesh is subjected to a blast chilling phase at -50/-60 degrees Celsius, so that the core temperature of the product reaches substantially -25 degrees Celsius in a time preferably less than or equal to two hours. (Obviously slight deviations do not extend outside the scope of the present invention.)

The reason why the flesh is advantageously abated and not simply frozen has been described earlier in the discussion of the known art

It should be noted, however, that in the method for treating the fish flesh described by the present invention, this passage is further improved and advantageous by virtue of the dehumidification occurred before the blast chilling: in fact the fish flesh contains less water and not only smaller crystals of ice are formed during blast chilling (advantageous feature of blast chilling in general compared to ere freezing), but in a further advantageous way less ice crystals are formed, all to the advantage of maintaining as intact as possible the fish flesh subjected to substantially non-invasive treatments from the point of view of the variation of the nutritive characteristics of the product.

It should be further noted that recent studies have shown that the formation of histamine in foodstuffs depends and is influenced by the time-temperature-humidity conditions in which the foodstuff is preserved; in a particularly advantageous way the dehumidification step to which the fish flesh product of the present invention is subjected delays the histamine formation phenomenon to the advantage of the quality of the product itself and with compliance with the regulations concerning the maximum amount of histamine tolerated by CE regulations present in the fish products dedicated to this factor.

In the next phase the product is vacuum-sealed, the vacuum-sealed generated is substantially complete, or 99%.

The fish flesh product thus packaged in the following step is kept at low and uniform temperatures of about -20 degrees Celsius in boxes suitable for the purpose; preferably sturdy boxes of plasticized cardboard suitable for maintaining such a product

It should be noted that, in a totally innovative and advantageous way, the steps described hereinabove allow to reach all the purposes of the invention mentioned above.

In a particularly advantageous way the dehumidification of the fish flesh, which causes a loss of water to the product, and the subsequent abatement before vacuuming the fish flesh bring innumerable advantages for the preservation of the product, in addition to the advantages described above, as was verified by the applicant after numerous studies in this field. As mentioned, the blast chilling of the product instead of freezing keeps the fish flesh cells intact as they are formed, by virtue of the blast chilling of smaller ice crystals. In a further advantageous and innovative way, by virtue of the phase of dehumidification after blast chilling, the quantity of water in the fish flesh is further reduced, so the quality of the fish flesh is improved and less deteriorated even during storage.

By virtue of the method described here, advantageously, by reducing the amount of water present in the fish flesh at the time of vacuum creation, the vitamins and other nutrients remain advantageously in the product thus preserving the original quality and nutritive properties in a much better way as verified by product tests. Furthermore, in a further advantageous way, it has been verified that in this way the properly preserved fish remains excellent for consumption for nine months, tests are carried out for longer periods which seem likely given the quality of the product

In a further advantageous way, the fish flesh product once thawed can remain in the refrigerator for at least 2 days, such as fresh fish; the lack of water in the defrosted product means that the smell (or rather the substantial absence of smell) of the defrosted fish is similar to the smell, or rather the absence of the smell that distinguishes the fresh fish, as well as the consistency and the taste, as thawing occurs. The bacterial proliferation that usually occurs when the product is defrosted when it contains a lot of water is reduced.

Again, in a further advantageous way, at the time of thawing, the fish flesh, which as it is known for hygienic/sanitary reasons must be removed from the vacuum pack, is re-hydrated directly in the refrigerator re-acquiring the consistency of a recently fresh caught product.

A product is therefore obtained ready to be used both raw and cooked; the product thus treated and preserved advantageously therefore retains all the nutritional characteristics of fresh fish flesh.

In a further advantageous manner, when subjected to cooking, even the cooking characteristics of the fish flesh treated by the method described by the present invention remain substantially comparable to those of fresh fish, so that there are no problems of deterioration of the fish due to freezing before putting it under vacuum, nor arise any of the problems described if the fish flesh is treated by blast chilling before vacuuming (ie: the product cooked a little too long becomes extremely hard). This happens advantageously because by virtue of the dehumidification with the following blast chilling and vacuum creation, since cell breaking and therefore of the fibers does not occur, if not in a minimal quantity, by virtue of the decreased presence of water without altering the quality of the fish, even in case of prolonged cooking of the product, the product reacts as a fresh product given that the same equilibrium of liquids of a fresh product is restored in the product of when the product is defrosted in the correct way as indicated. So unlike fish that is only blast chilled, which tends to harden, and unlike the traditional frozen fish, which in the preparation phase has seen the breaking of its cells and has fibers that are not intact, to a prolonged cooking does not react by compacting but on the contrary loosening, the fish flesh product treated with the method described by the present invention maintains the same characteristics of fresh fish also during cooking.

Said product is preserved much longer than the frozen fish obtained by normal methods, breaking down the bacterial load in fish without the aid of chemicals or additives.

Particularly advantageously said product obtained by virtue of said innovative method for the treatment and preservation of fish is particularly suitable for consumption, even by children, to whom it is always preferable to give a healthy, good, natural and untreated product

Lastly, a substantial advantage is the taste and consistency of the fish that is compared to that of a fresh fish by consumers.

It should be noted that, in a further advantageous way, the weight of the purchased product corresponds to the weight of fish flesh or is 5% lower than it would be if there had been no dehumidification, so at the same weight, the consumer is benefitted. This obviously contributes to the product obtained in this way. It should be noted that it is customary in the sector to add water fish flesh to make the product heavier and therefore the price more expensive; It therefore appears clear that in the case described here, a qualitatively better product is obtained and with a comparatively lower price.

### Detailed description of some embodiments of the invention.

These and further objects obtained by virtue of the innovative method for the treatment and preservation of fish described by the present invention, as well as variations in the steps of the method and preferred embodiments, will hereinafter be described in some preferred embodiments detailed below.

The method for the treatment and preservation of fish described by the present invention in a particularly preferred embodiment comprises at least the steps of:
- fish-cleaning preferably with suction systems;
   This to avoid contact of the entrails with the fish flesh, in particular the fish is eviscerated by gutting it with a fingernail to avoid breaking the entrails, subsequently the entrails are removed preferably by suction to avoid any possible contact with the fish flesh;
   the fish is therefore kept in moderately cold environments, or at temperatures of around 14-16 degrees Celsius, using air-conditioned rooms;
- filleting the fish and eliminations of the fish bones;
- eventual stripping of the fillets;
characterized in that it further comprises at least the steps of:
- dehumidification of fillets or fish flesh to remove from the flesh from 3 to 10% of moisture;

Said innovative process performed by the applicant is carried out in refrigerator cells or similar which are regulated at a temperature of about 0-4 degrees Celsius, preferably, but not necessarily, innovatively modified as previously described; in any case, any suitable means for achieving the purpose of dehumidifying the fish flesh of the defined percentage in a time preferably not exceeding 2 hours is suitable for the purpose of the present invention.

In particular, if (preferably, but not necessarily) a dehumidification device such as the one described above is used, namely: A dehumidification device, in particular for fish flesh, suitable for use in the described method, wherein said device comprises at least one refrigerator cell or refrigerator machine set at a temperature of about 0-4 degrees Celsius, wherein the device further comprises a drying machine and a circuit connecting said refrigerator and said dryer, said device dehumidifying the fish flesh product with times of drying or dehumidification of the product substantially of 1-3 hours, depending on the amount of product introduced into the dehumidifier device, the dehumidification causing a weight loss of the fish flesh due to evaporation of H₂0 of 3-10% keeping intact in the product all the nutrients.

It should be noted that the method performed is in compliance with the health regulations, such as (but not only) with the EEC 853/2004 regulation among the others prescribed for the technical field. To obtain a water loss, equivalent to a 5% weight loss of the fish flesh, the product must usually be subjected to said passage or dehumidification process for about two hours.

The temperature of 4 Celsius degrees complies with the requirements prescribed by the AS L regarding the conservation of fish flesh. - blast chilling or quick freeze of the fish flesh at a temperature of -30/-50 (that can be varied up to -70 Celsius degrees) to obtain a core temperature of the product substantially of -25 Celsius degrees; the sensor for measuring temperature is inserted inside the product, therefore at-30 Celsius degrees more time is needed to reach the desired temperature, at -50 Celsius degrees less time is needed, which in the case herein described is substantially two hours to reach said objective, in the blast chiller at -30 Celsius degrees a small quantity of fish is placed, while with temperature in the blast chiller of -50, Celsius degrees a large quantity of fish can be introduced reaching the same objective always in the same time.

From here the phase of:
- adjustment of the abatement temperature depending on the amount of fish placed in the blast tmax in a blast chiller preferably 2 hours;
   The abatement time usually desired is of maximum 2 hours, this because the speed of abatement has an effect on the quality of the product; numerous tests have shown that reaching -25 Celsius degrees at the core of the product in a variable time from 1 to 2 hours produces the desired effects, a longer time, namely less rapid, causes creation of greater ice crystals, therefore the end result is farther from one of the desired aims namely smaller ice crystals in the product, for the aforesaid motives.
   However, this restriction is not to be considered limiting with respect to the purpose of the present invention but merely indicative of standard procedures normally used and correctly functioning in order to guarantee an excellent quality to the finished product
- vacuum packaging of the product, the product is subjected to a procedure for making substantially complete vacuum, i.e. to 99% vacuum;
- maintaining the product thus packaged at low and uniform temperatures of about
- 20 degrees Celsius until the time of consumption.

The product can obviously be packaged or further canned, for example, in suitable boxes of sturdy cardboard or plasticized cardboard for the purpose of the product contained therein.
- thawing of the product before use, preferably in the refrigerator by extracting it for the vacuum packaging, the product can be consumed within three days as a fresh product and can be consumed both raw and cooked.

It should be noted that in a particularly advantageous manner the fish flesh product preserved with the innovative method described by the present invention maintains to all effects the organoleptic and nutritional characteristics typical of the fresh product, moreover the product is totally natural, not containing neither dyes nor preservatives of any kind.

In a further advantageous manner, as mentioned, the product rehydrates itself in the refrigerator instead of losing water, as a normally defrosted product, thus avoiding the formation of bacteria that are possibly harmful to the health of the product or in any case causing bad smell to the fish flesh and therefore are obviously disadvantageous for the product

Furthermore, in one or more innovative variants said method can comprise, after the phase of elimination of the fish bones and filleting and/or stripping of the fillets, furthermore the phase of
- processing of fish flesh like ground flesh and re-assembling it in the form of meatballs or hamburgers;
this is obtained by a passage in a refrigerated flesh grinder which operates at temperatures substantially close to 0 degrees Celsius (Twork c.a 0 degrees Celsius), with exit temperature from the flesh grinder of c.a. 10-15 degrees Celsius, it is to be noted that the oxygenation of the fish flesh caused by the grinding together with the increase of temperature causes a loss of humidity with weight loss of the fish flesh from 2% to 3%. Therefore the total humidly loss in this case will be of about 7% indicatively.

Therefore further phases of:
- passage in a refrigerated flesh grinder with (Twork) c.a. 0 degrees Celsius, with (Tout) of the machining phase of c.a. 10-15 degrees Celsius; obtaining moisture loss with a 2% to 3% decrease in the weight of fish flesh;
- loss of total moisture (processing ground flesh + dehumidification passage) c.a. substantially = 7% ;

It is evident that, by virtue of the method described by the present invention, all the purposes described here are advantageously and innovatively realized, it should be noted that variations with regard to any non-influential temperature ranges with regard to the flesh processing steps of the fish, the type or species of fish to be treated, or variations in temperature in the various phases or variations of specific humidity of the product, as well as variation of the weight of the treated fish flesh or time and storage conditions after the basic treatment steps of dehumidification, abatement and vacuuming, or modification of the succession of the various phases, provided that these modifications do not undermine the advantages of the method, appear variants comprised in the object of the present invention, the method for the preservation of fish flesh, as described, are to be considered included in the object of this invention regarding the ways to the embodiments in this sense, as described in the appended claims.

## Claims

1. Method for the preservation of fish flesh comprising at least steps of processing of the fish meat after fishing such as i.e.
- fish-cleaning;
- preservation of the fish in air-conditioned environment of about 14-16 degrees Celsius;
- filleting the fish and clean up any fish bones;
- stripping of the fillets;
**characterized in** comprising al least the steps of:
- dehumidification in appropriate ventilated cell in order to eliminate at least 3-10% of the water present in the flesh of the fish, said process producing a loss in the fish flesh weight of about4-10%
- blast chilling or quick freeze of the fish flesh at a temperature preferably of -30 / -50 Celsius degrees to obtain a core temperature of the product substantially of -25 Celsius degrees;
- adjustment of the abatement temperature depending on the amount of fish placed in the blast chiller to keep the tmax in the blast chiller being preferably 2 hours;
- vacuum packaging of the product fish flesh, wherein the product is subjected to a procedure for making substantially total vacuum, i.e. to 99% vacuum;
- maintaining the product thus packaged at low and uniform temperatures of about -20 Celsius degrees until the time of consumption.

2. The method for the preservation of fish flesh according to claim 1, further comprising at least the step of:
- Regulation of abatement temperature control depending on the amount of fish inserted in the blast chiller at up to c.a. -70 Degrees Celsius in the case of large quantities of fish to keep the tmax in the blast chiller at at most 2 hours.

3. The method for the preservation of fish flesh according to any of the preceding claims, further comprising at least the steps of:
- thawing of the product before use, preferably in the refrigerator by pulling vacuum packaging;
- re-hydration of the product fish flesh in the refrigerator;
- consumption of fish flesh product within three days, the fish flesh having the same characteristics as a fresh fish product;
- consumption can be raw or cooked.

4. The method for the preservation of fish flesh according to any of the preceding claims, further comprising after the step of elimination of the bones and thread cutting and/or stripping of the threads, the further steps of:
- processing of fish flesh like ground flesh and re-assembling in the form of meatballs or hamburgers;
- passage in a refrigerated meat grinder with (Twork) c.a. 0 degrees Celsius, with (tout) of the machining phase of c.a.. 10-15 degrees Celsius; obtaining moisture loss with a 2% to 3% decrease in the weight of fish flesh;
- wherein the loss of total moisture ( processing ground flesh + dehumidification passage) is of about 7% and
- carrying out subsequent steps as described in claim 1 and following.

5. The method for the preservation of fish flesh according to any of the preceding claims, wherein the ideal dehumidification point of the product fish flesh is 5%.

6. The method for the preservation of fish flesh according to any of the preceding claims wherein in the step of abatement the temperature can be adjusted to up to -70 degrees centigrade depending on the amount of fish inserted in the blast chiller.

## Patentansprüche

1. Verfahren zum Haltbarmachen von Fischfleisch, das zumindest folgende Verarbeitungsschritte nach dem Fang umfasst:
- Reinigung des Fischs;
- Lagerung des Fisches in klimatisierter Umgebung bei etwa 14-16 °C;
- Filetieren des Fisches und Entfernen der Gräten;
- Entgräten des Fischs;
**dadurch gekennzeichnet, dass** es mindestens die folgenden Schritte umfasst:
- Entfeuchten in einer geeigneten belüfteten Zelle, um mindestens 3 bis 10 % des im Fischfleisch enthaltenen Wassers zu entfernen, wobei das Verfahren einen Gewichtsverlust des Fischfleisches von etwa 4 bis 10 % bewirkt.
- Schockkühlung oder Schnellgefrieren des Fischfleisches bei einer Temperatur von vorzugsweise -30 / -50 Grad Celsius, um eine Kerntemperatur des Erzeugnisses von etwa -25 Grad Celsius zu erreichen;
- Anpassung der Absenktemperatur in Abhängigkeit von der in den Schockkühler eingebrachten Fischmenge, um tmax im Schockkühler bei t zu halten: tmax vorzugsweise 2 Stunden;
- Vakuumverpackung des Erzeugnisses Fischfleisch, wobei das Erzeugnis einem Verfahren unterzogen wird, mit dem ein im Wesentlichen vollständiges Vakuum, d. h. ein Vakuum von 99 %, erzeugt wird;
- Halten des so verpackten Erzeugnisses bis zum Zeitpunkt des Verzehrs bei einer niedrigen und konstanten Temperatur von ungefähr - 20 °C.

2. Verfahren zur Konservierung von Fischfleisch nach Anspruch 1, das ferner mindestens den folgenden Schritt umfasst:
- Regelung der Absenktemperatur in Abhängigkeit von der im Schockfroster befindlichen Fischmenge bis auf ca. -70 °C bei großen Fischmengen, um tmax im Schockfroster bei maximal 2 Stunden zu halten.

3. Verfahren zur Konservierung von Fischfleisch nach einem der vorhergehenden Ansprüche, das zusätzlich mindestens die folgenden Schritte umfasst:
- Auftauen des Produktes vor der Verwendung. Am besten im Kühlschrank, indem die Vakuumverpackung geöffnet wird;
- Rehydratisierung des Fischfleisches im Kühlschrank;
- Verzehr des Fischfleischerzeugnisses innerhalb von drei Tagen, wobei das Fischfleisch die gleichen Eigenschaften wie ein Frischfischprodukt aufweist;
- Der Verzehr kann roh oder gekocht erfolgen.

4. Verfahren zum Haltbarmachen von Fischfleisch nach einem der vorhergehenden Ansprüche, das nach dem Schritt des Entgrätens und Fadenabschneidens und/oder Fadenabstreifens die folgenden weiteren Schritte umfasst:
- Verarbeitung von Frisch- und Hackfleisch/Faschiertem und Weiterverarbeitung in Form von Frikadellen oder Hamburgern
- Durchlaufen eines gekühlten Fleischwolfs mit (Twork) c.a. 0 °C, mit (tout) ca. 10-15 °C. Es wird ein Feuchtigkeitsverlust mit einem Gewichtsverlust des Fischfleisches von 2 bis 3 % erzielt;
- wobei der Verlust an Gesamtfeuchte (verarbeitetes Bodenfleisch und Entfeuchtungsdurchgang) etwa 7 % beträgt und
- Durchführen der folgenden Schritte gemäß Anspruch 1 und folgende.

5. Verfahren zur Konservierung von Fischfleisch nach einem der vorhergehenden Ansprüche, wobei der ideale Entfeuchtungspunkt des Produktes Fischfleisch 5 % beträgt.

6. Verfahren zum Haltbarmachen von Fischfleisch nach einem der vorhergehenden Ansprüche, wobei in dem Schritt des Abkühlens die Temperatur in Abhängigkeit von der in den Schockkühler eingelegten Fischmenge auf bis zu -70 Grad Celsius eingestellt werden kann.

## Revendications

1. Méthode de conservation de la chair de poisson comprenant au moins des étapes de traitement de la chair de poisson après la pêche telles que c'est-à-dire
- le nettoyage du poisson ;
- conservation du poisson dans un environnement climatisé d'environ 14-16 degrés Celsius ;
- filetage du poisson et nettoyage des arêtes de poisson ;
- détachement des filets ;
**caractérisée en ce qu'**elle comprend au moins les étapes de :
- déshumidification dans une cellule ventilée appropriée afin d'éliminer au moins de 3 à 10% de l'eau présente dans la chair du poisson, ledit procédé produisant une perte de poids de chair de poisson d'environ 4 à 10 %
- refroidissement rapide ou congélation rapide de la chair de poisson à une température de préférence de -30/-50 degrés Celsius pour obtenir une température à coeur du produit sensiblement de -25 degrés Celsius ;
- ajustement de la température d'abattement en fonction de la quantité de poisson placée dans la cellule de refroidissement rapide pour maintenir le tmax dans la cellule de refroidissement rapide, le t : tmax étant de préférence de 2 heures ;
- emballage sous vide de la chair de poisson produit, où le produit est soumis à une procédure pour réaliser un vide sensiblement total, c'est-à-dire un vide de 99 % ;
- maintien du produit ainsi conditionné à des températures basses et uniformes de -25 degrés Celsius environ jusqu'au moment de la consommation.

2. La méthode de conservation de chair de poisson selon la revendication 1, comprenant en outre au moins l'étape de :
- Régulation du contrôle de la température d'abattement en fonction de la quantité de poisson insérée dans la cellule de refroidissement jusqu'à env. -70 degrés Celsius dans le cas de grandes quantités de poisson pour maintenir tmax dans la cellule de refroidissement à 2 heures maximum.

3. La méthode de conservation de chair de poisson selon l'une quelconque des revendications précédentes, comprenant en outre au moins les étapes de :
- décongélation du produit avant utilisation, de préférence au réfrigérateur en retirant l'emballage sous vide ;
- réhydratation de la chair de poisson produit au réfrigérateur ;
- consommation du produit de chair de poisson dans les trois jours, la chair de poisson ayant les mêmes caractéristiques qu'un produit de poisson frais ;
- la consommation peut être crue ou cuite.

4. La méthode de conservation de la chair de poisson selon l'une quelconque des revendications précédentes, comprenant en outre après l'étape d'élimination des arêtes et de coupe des filets et/ou de dépouillement des filets, les étapes supplémentaires de :
- transformation de la chair de poisson en chair hachée et réassemblage sous forme de boulettes ou hamburgers ;
- passage dans un hachoir à viande réfrigéré avec (Twork) environ à 0 degrés Celsius, avec (tout) de la phase d'usinage à environ 10-15 degrés Celsius ; obtention d'une perte d'humidité avec une diminution de 2 à 3 % du poids de la chair de poisson ;
- où la perte d'humidité totale (traitement de la chair hachée + passage de déshumidification) est d'environ 7 % et
- réalisation des étapes ultérieures telles que décrites dans la revendication 1 et suivantes.

5. La méthode de conservation de chair de poisson selon l'une quelconque des revendications précédentes, où le point de déshumidification idéal du produit de chair de poisson est de 5 %.

6. La méthode de conservation de la chair de poisson selon l'une quelconque des revendications précédentes, où à l'étape d'abattement de la température peut être ajustée jusqu'à -70 degrés centigrades en fonction de la quantité de poisson insérée dans la cellule de refroidissement rapide.
